Europäisches Patentamt

European Patent Office

Office européen des brevets

(11) Publication number: **0 158 457**
**B1**

(12) **EUROPEAN PATENT SPECIFICATION**

(45) Date of publication of patent specification: **02.11.89**

(51) Int. Cl.⁴: **F 16 J 15/46, F 16 J 15/48**

(21) Application number: **85301825.7**

(22) Date of filing: **15.03.85**

(54) **Pressure-activated seal ring.**

(30) Priority: **09.04.84 US 598421**

(43) Date of publication of application:
**16.10.85 Bulletin 85/42**

(45) Publication of the grant of the patent:
**02.11.89 Bulletin 89/44**

(84) Designated Contracting States:
**DE FR GB IT**

(56) References cited:
**US-A-3 259 392**
**US-A-3 400 937**

(73) Proprietor: **GENERAL MOTORS CORPORATION**
**General Motors Building 3044 West Grand**
**Boulevard**
**Detroit Michigan 48202 (US)**

(72) Inventor: **Allen, Karl David**
**45120 Brunswick**
**Canton Michigan 48187 (US)**
Inventor: **Brace, Alan Lee**
**14251 Richfield**
**Livonia Michigan 48154 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

Courier Press, Leamington Spa, England.

## Description

This invention relates to a pressure-activated seal ring as specified in the preamble of claim 1, for example as disclosed in US-A-4 165 079. A pressure-activated resilient shaft seal for the propeller shaft of a submarine is also disclosed in US-A-3 400 937, which resilient shaft seal is provided with three symmetrically-arranged grooves in an outer cylindrical surface thereof whereby the external water pressure surrounding the shaft aids in maintaining the seal in sealing contact with the shaft when the shaft is at rest.

Prior-art pressure-activated seal rings have smooth inner and outer cylindrical surfaces. It is possible during operation of such seal rings for fluid flow passing the outer cylindrical surface to force the sealing ring inwardly. The smooth inner cylindrical surface can thereby seal in a groove bottom, thus preventing an immediate outward pressure force from developing on the inner surface. Such seal rings result in relatively high fluid leakage in a hydraulic control system.

The present invention is concerned with overcoming this disadvantage.

To this end a pressure-activated seal ring in accordance with the present invention is characterised by the features specified in the characterising portion of claim 1.

Such a seal ring thus reduces leakage by ensuring that the seal ring will be forced by the action of fluid pressure into sealing engagement with its sealing surface.

If for example an undulating inner surface is provided for the pressure-activated seal ring, the seal ring in accordance with the invention can initially permit some fluid leakage across the outer cylindrical surface. However, such leakage is of necessity accompanied by a pressure drop. Because the inner surface of the seal ring is undulated, static fluid pressure can act upon the inner surface and thereby overcome the pressure acting on the outer surface, to force the seal ring into sealing engagement at the outer surface.

Thus the undulations in one of the seal ring surfaces, for example the inner surface, prevent sealing at that seal surface and simultaneously permit access of pressurized fluid to act thereon, thereby enforcing movement of the seal ring to seal at the other seal surface.

In the drawing:

Figure 1 is a fragmentary longitudinal sectional view of a portion of a hydraulic flow system;

Figure 2 is an enlarged view of a portion of Figure 1, showing a prior-art seal ring;

Figure 3 is an enlarged view of the same portion of Figure 1 but showing a seal ring in accordance with the present invention; and

Figure 4 is an elevational view of a seal ring in accordance with the present invention.

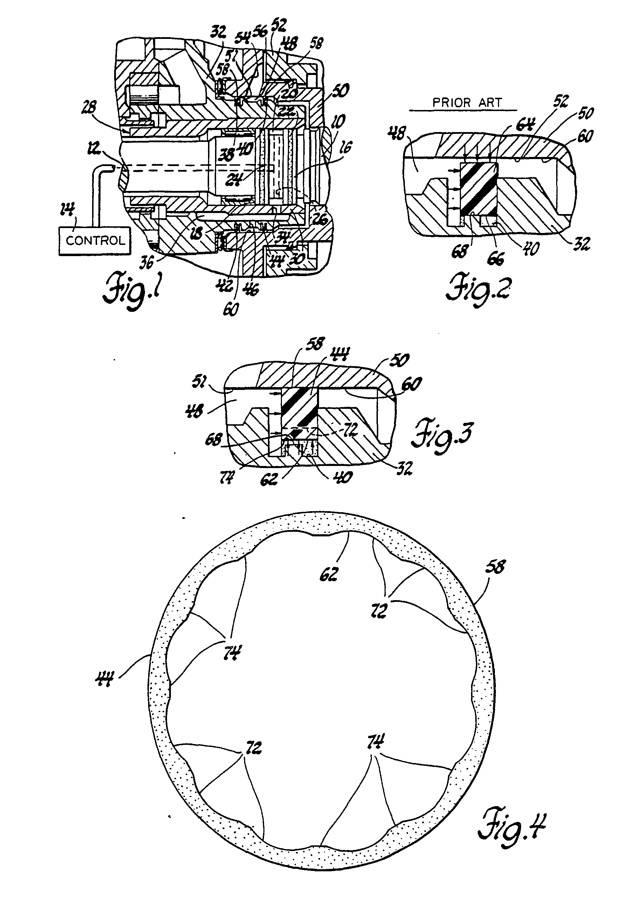

With reference now to the drawing, wherein like characters represent the same or corresponding parts throughout the several views, there is seen in Figure 1 a portion of a power transmission having a hydraulic fluid flow circuit disposed therein. The mechanism shown in Figure 1 includes a rotary shaft member 10 having a centrally disposed fluid passage 12 which is connected to receive fluid from a conventional hydraulic control mechanism 14. The shaft 10 has a pair of annular protuberances 16 and 18 which cooperate to form an annular hydraulic fluid chamber 20. The protuberances 16 and 18, which are formed as grooved lands, each have disposed therein a respective seal ring 22 and 24. The chamber 20 is in fluid communication with the passage 12 by way of a radially extending passage 26 formed in the shaft 10. The seal rings 22 and 24 are in abutting sealing relationship with a housing assembly 28 which includes a sleeve 30 and a clutch housing support 32. The sleeve 30 has at least one passage 34 which communicates fluid between the annular chamber 20 and a pressure chamber 36 formed in the clutch housing support 32.

The clutch housing support 32 has formed therein a pair of annular grooves 38 and 40, in which grooves are disposed pressure-activated seal rings 42 and 44 respectively. The clutch housing support 32 has formed therein a passage 46 which communicates fluid from the chamber 36 to an annular fluid chamber 48 disposed between the seal rings 42 and 44.

Drivingly connected to the shaft 10 and rotatably disposed about the support 32 is a clutch housing 50. The clutch housing 50 has slidably disposed therein a pressure-actuated clutch piston 52. Inasmuch as the assembly, structure and operation of such clutch pistons is well-known, a more detailed description thereof is not considered necessary.

The clutch housing 50 has a bore 51 which cooperates with the seal rings 42 and 44 to enclose the annular fluid chamber 48. The clutch housing 50 has a fluid passage 54 formed therein, which passage 54 is in fluid communication with the annular chamber 48 and a clutch control chamber 56.

When it is desired to activate the piston 52, the clutch control chamber 56 is pressurized by admitting pressurized fluid to the passage 12 from the control mechanism 14. To ensure constant and efficient operation of the clutch piston 52, it is desirable to maintain fluid leakage within the hydraulic fluid flow path to a minimum. To this end, the seal rings 44 and 42 must be forced into sealing abutment between the outer cylindrical surface 58 of the seal ring and an inner cylindrical seal surface 60 of the bore 51 of the clutch housing 50. Such a sealing arrangement is shown in Figure 3. When such sealing abutment occurs, the fluid pressure in the annular chamber 48 will operate on an inner cylindrical surface 62 of the seal ring 44 to ensure the sealing contact.

With prior-art seal rings, such as a seal ring 64 shown in Figure 2, it is possible for the inner cylindrical surface 66 to seal against an annular cylindrical surface 68 formed in the groove 40. When this occurs, the fluid in chamber 48 will flow axially outwardly across the outer cylindrical surface of the prior-art sealing ring 64, so imposing a pressure force thereon which will maintain the prior-art seal ring 64 in an inward position. The resulting fluid leakage is detrimental to the efficiency and consistency of the clutch operating system.

In contrast, as seen in Figure 3, the present invention makes provision for the seal 44 to be forced outwardly into the desired sealing engagement. This is accomplished, as seen in Figure 3, by providing the seal ring 44 with an inner surface 62 which has undulations or scallops 72 formed thereon. Intermediate the scallops 72 are cylindrical surfaces 74 which will abut the inner surface 68 of the groove 40 should the seal ring for some reason be compressed into the groove 40. However, when the annular fluid chamber 48 is pressurised, the fluid pressure will be directed into the scalloped or undulating portions 72 to act radially outwardly on the inner surface 62 of the seal ring 44.

Since the pressure acting on the inner surface is a static pressure, it will be at a pressure level equal to the pressure in the annular chamber 48, whereas any pressure acting on the outer surface 58 will be a reduced pressure, due to the dynamic character of the fluid as it flows across the outer surface 58. As is well known, the static pressure will be at a higher level than the dynamic pressure, such that the outward force acting on the seal ring 44 will be greater than the inward force, thereby urging the seal ring 44 into sealing engagement with the surface 60 of the clutch housing 50. This sealing engagement will occur substantially simultaneously with the initial pressure increase in the annular chamber 48, prior to any significant pressure increase acting on the clutch piston 52. Therefore, the piston actuation will be consistent, and the hydraulic efficiency of the circuit is greatly improved.

## Claim

A pressure-activated seal ring having inner and outer cylindrical surfaces (62, 58), for use in a seal groove (40) disposed in one (32) of a pair of relatively movable components (32, 50), one of which has a bore (51) and the other of which has a shaft, in a hydraulic system in which fluid pressure is applied to one radial face of the seal ring (44) and to said inner cylindrical surface (62) of the seal ring (44), whereby the seal ring (44) is urged radially against an inner surface of the outer component (50) and axially against one side wall of the groove (40), characterised in that said inner cylindrical surface (62) of the seal ring (44) has formed therein a plurality of undulations (72) to permit fluid pressure as aforesaid to act on said inner cylindrical surface (62) when the seal ring (44) is pressurized, even if the seal ring (44) is initially compressed radially inwards, to thereby ensure radially outward extension of the seal ring (44) to seal against a seal surface (60) of the bore (51).

## Patentanspruch

Druckbetätigter Dichtring mit inneren und äußeren zylindrischen Oberflächen (62, 58) zur Verwendung in einer Dichtungs-Rille (40), die in einer (32) von einem Paar relativ beweglicher Komponenten (32, 50) angeordnet ist, von denen eine eine Bohrung (51) und von denen die andere einen Schaft aufweist und die sich in einem Hydrauliksystem befinden, in dem Fluiddruck auf eine radiale Fläche des Dichtringes (44) und auf die innere zylindrische Oberfläche (62) des Dichtringes (44) aufgebracht ist, wodurch der Dichtring radial gegen eine innere Oberfläche der äußeren Komponente (50) und axial gegen eine Seitenwand der Rille (40) gedrängt ist, dadurch gekennzeichnet, daß in der inneren zylindrischen Oberfläche (62) des Dichtringes (44) eine Mehrzahl von Wellungen (72) ausgebildet sind, um es dem Fluiddruck, wie vorher erwähnt, zu erlauben auf die innere zylindrische Oberfläche (62) zu wirken, wenn der Dichtring (44) unter Druck gesetzt ist, gleich ob der Dichtring (44) anfänglich radial nach innen zusammengedrückt ist, um dabei die Ausdehnung des Dichtringes (44) radial nach außen sicherzustellen, um gegen eine Dichtoberfläche (60) der Bohrung (51) abzudichten.

## Revendication

Bague d'étanchéité actionnée par pression, comportant des surfaces cylindriques intérieure et extérieure (62, 58), destinée à être utilisée dans une gorge de joint étanche (40) ménagée dans l'un (32) de deux composants (32, 50) mobiles l'un par rapport à l'autre, dont l'un des composants comportant un alésage (51) et l'autre un arbre, dans un système hydraulique dans lequel une pression de fluide est appliquée à une première face radiale de la bague d'étanchéité (44) et à ladite surface cylindrique intérieure (62) de la bague d'étanchéité (44), de sorte que la bague d'étanchéité (44) est sollicitée radialement contre une surface intérieure du composant extérieur (50) et axialement contre une paroi latérale de la gorge (40), caractérisée en ce qu'une pluralité d'ondulations (72) sont formées dans ladite surface cylindrique intérieure (62) de la bague d'étanchéité (44), pour permettre à la pression du fluide, comme déjà indiqué, d'agir sur ladite surface cylindrique intérieure (62) lorsque la bague d'étanchéité (44) est mise sous pression, même si la bague d'étanchéité (44) est initialement comprimée radialement vers l'intérieur, afin d'assurer ainsi une dilatation radialement vers l'extérieur de la bague d'étanchéité (44) pour former un joint étanche contre une surface de joint étanche (60) de l'alésage (51).

Fig.1

PRIOR ART

Fig.2

Fig.3

Fig.4